# EUROPEAN PATENT SPECIFICATION

(11) **EP 3 536 967 B1**
(45) Date of publication and mention of the grant of the patent: **30.09.2020**
(21) Application number: 18209242.9
(22) Date of filing: 29.11.2018
(51) Int. Cl.: F04D 25/06, F04D 29/42, F04D 29/62

(54) **FAN**
LÜFTER
VENTILATEUR

(30) Priority: 08.03.2018 TW 107107922
(43) Date of publication of application: 11.09.2019
(73) Proprietor: Sunonwealth Electric Machine Industry Co., Ltd., Kaohsiung City / Taiwan, R.O.C. (TW)
(72) Inventor: HORNG, Alex, Kaohsiung City, Taiwan, R.O.C. (TW); Hu, Wang-Ling, Kaohsiung City, Taiwan (R.O.C.) (TW); Wang, Yi-Hao, Kaohsiung City, Taiwan (R.O.C.) (TW)
(74) Representative: Louis Pöhlau Lohrentz

(56) References cited:
- EP-A2- 2 138 725
- WO-A1-2013/059783
- WO-A2-2015/158497
- US-A- 4 762 472
- US-A1- 2015 176 603

## Description

### BACKGROUND OF THE INVENTION

### 1. Field of the Invention

The present invention generally relates to a fan and, more particularly, to a fan which can improve the convenience in assembly.

### 2. Description of the Related Art

An air-curtain apparatus with a fan is generally installed in the head of the door frame at both the entrance and the exit of a supermarket or a department store in order to prevent the escaping of the cool air and the intrusion of the foreign objects, such as mosquitos, flies and/or the insects. The air blows downwardly to create an air wall between the indoor space and the outdoor space, which prevents the escaping of the cool air and the entry of the polluted air or dust.

The fan as mentioned above includes a motor frame, an impeller assembly and a housing. A motor is installed in the motor frame. The impeller assembly is connected to the motor and is driven to rotate by the motor. The housing forms a compartment for receiving the impeller assembly. The housing includes an air inlet and an air outlet. The air inlet is located at one end of the housing. During the operation of the motor, the impeller assembly rotates to draw the air from the air inlet of the housing and to expel the air out of the compartment via the air outlet of the housing. Thus, a significant amount of air is being sent out of the housing, forming the air wall. A known fan motor support for ventilation is shown for example in WO 2015/158 497 A2.

However, the motor frame, the impeller assembly and the housing are assembled using a plurality of fasteners such as screws. Thus, during the assembly of the fan, it requires labor effort to align the screw holes of the components and to respectively insert the fasteners through the pairs of the screw holes. Disadvantageously, the assembly of the fan is time-consuming. Since the assembly is carried out by the labor effort, the assembly is inconvenient and the manufacturing cost is increased. Thus, the efficiency is low.

In light of the above, it is necessary to improve the conventional fan.

### SUMMARY OF THE INVENTION

It is therefore the objective of this invention to provide a fan which reduces the assembly procedure and lowers the labor cost. Thus, the convenience and efficiency in assembly are improved.

In an aspect, a fan includes a motor, two frames, an impeller and a housing assembly. The two frames are coupled with an outer periphery of the motor and are engaged with each other by way of fastening. Each of the two frames includes one groove. The impeller is connected to the motor and is driven to rotate by the motor. The housing assembly houses the impeller and includes a first housing part and a second housing part. The first and second housing parts are engaged with each other by way of fastening. A protruding lip is provided on one of two end faces of the first housing part which is relatively adjacent to the motor. Another protruding lip is provided on one of two end faces of the second housing part which is relatively adjacent to the motor. The protruding lip and the other protruding lip are engaged with the grooves of the two frames.

Based on the above, the assembly of the two frames, the first housing part and the second housing part of the fan can be completed simply by way of fastening. The invention does not require the operators to align the screwing holes of the components and to insert the fasteners therethrough. Advantageously, the assembly procedure of the fan is simplified and the labor cost is reduced, improving the convenience and efficiency in assembly of the fan.

In an example, the housing assembly further includes at least one fastening member, and the first and second housing parts are fastened with each other through the at least one fastening member. Thus, the convenience and efficiency in assembly and disassembly of the fan is improved under the simple structure which permits fast assembly and disassembly.

In the example, at least one first coupling portion is provided on each of the two end faces of the first housing part, at least one second coupling portion is provided on each of the two end faces of the second housing part, and the at least one first coupling portion and the at least one second coupling portion are connected to each other by way of fastening through the at least one fastening member. Thus, a secure engagement of the first and second housings is provided.

In the example, each of the at least one first coupling portion includes a recess and each of at least one second coupling portion includes a tongue inserted into the recess. Thus, the structure is simple which reduces the manufacturing cost and improves the convenience in assembly.

In the example, the two frames are fastened with each other through at least one fastening member. Thus, the convenience and efficiency in assembly and disassembly of the fan is improved under the simple structure which permits fast assembly and disassembly.

In the example, one of the two frames includes at least one first engagement portion, and another of the two frames includes at least one second engagement portion engaged with the at least one first engagement portion by way of fastening through the at least one fastening member. Thus, the engagement effect and the convenience in assembly of the two frames are improved.

In the example, each of the at least one first engagement portion includes a first concave portion and a first protruding portion, and each of the at least one second engagement portion includes a second concave portion and a second protruding portion. The first protruding portion is engaged with the second concave portion, and the second protruding portion is engaged with the first concave portion. Thus, the structure is simple which reduces the manufacturing cost and improves the convenience in assembly.

In the example, one of the two frames includes a base, another of the two frames includes another base, and the base and the other base are connected to each other and placed on a planar surface. Thus, the two bases can support the motor, thus fixing the motor in a predetermined location.

In the example, the first housing part and the second housing part are coupled with each other to form a support, and a bottom face of the support is in a same level as a level of the base and a level of the base. Thus, the two bases can support the motor, thus fixing the motor in a predetermined location.

In the example, the fan further includes a buffering member. One of the two frames includes a receiving portion, another of the two frames includes another receiving portion, and the receiving portion and the other receiving portion are connected to each other to receive the buffering member. Thus, the buffering member can reduce the vibration.

In the example, the fan further includes another impeller and another housing assembly. The other impeller is driven to rotate by the motor and is located at one side of the motor opposite to another side of the motor where the impeller is. The other housing assembly houses the other impeller. One of the two frames includes two grooves, and another of the two frames includes another two grooves. Thus, a larger air volume is provided and the utility of the fan is improved.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is a perspective, exploded view of a fan according to a first embodiment of the invention.
FIG. 2 is a perspective view of two frames, a buffering member and a bearing unit of the fan in FIG. 1.
FIG. 3 is a partial, exploded view of the fan including the motor, the two frames and the housing assembly according to the first embodiment of the invention.
FIG. 4 is a partial, exploded view of the frame and the housing assembly of the fan in FIG. 1.
FIG. 5 shows the fan after assembly according to the first embodiment of the invention.
FIG. 6 is a perspective, exploded view of a fan according to a second embodiment of the invention.
FIG. 7 shows the fan after assembly according to the second embodiment of the invention.

In the various figures of the drawings, the same numerals designate the same or similar parts. Furthermore, when the terms "first", "second", "third", "fourth", "inner", "outer", "top", "bottom", "front", "rear", "axial", "radial", "longitudinal", "transverse", "length", "width", "height" and similar terms are used hereinafter, it should be understood that these terms have reference only to the structure shown in the drawings as it would appear to a person viewing the drawings, and are utilized only to facilitate describing the invention.

### DETAILED DESCRIPTION OF THE INVENTION

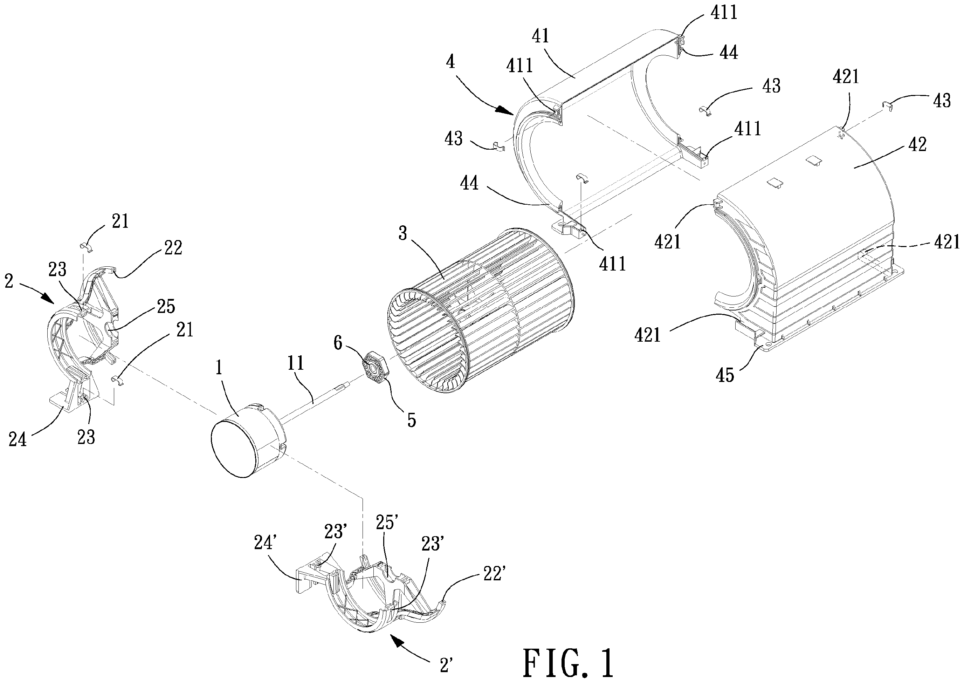

FIG. 1 shows a fan according to a first embodiment of the invention which can be installed in an air-curtain apparatus. The fan includes a motor 1, two frames 2 and 2' coupled with the outer periphery of the motor 1, an impeller 3 connected to the motor 1, and a housing assembly 4 housing the impeller 3.

The motor 1 provides power to the impeller 3. The motor 1 includes a shaft 11 rotatably connected to the impeller 3. In this embodiment, the motor 1 can have any structure and shape as long as the motor 1 can smoothly drive the impeller 3 to rotate.

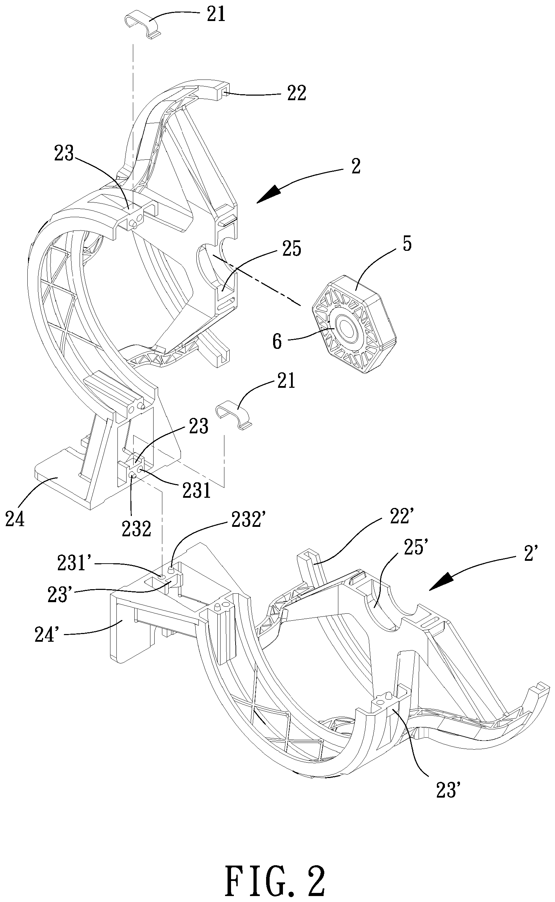

Referring to FIG. 2, the two frames 2 and 2' are coupled with the outer periphery of the motor 1 by way of fastening, which is done preferably with a plurality of fastening members 21. Each of the frames 2 and 2' includes at least one groove 22, 22'. One of the frames 2 and 2' includes at least one first engagement portion 23. Another of the frames 2 and 2' includes at least one second engagement portion 23'. The at least one first engagement portion 23 and the least one second engagement portion 23' are engaged with each other by way of fastening using at least one of the fastening members 21. In this arrangement, the reliability in engagement of the frames 2 and 2' and the convenience in assembly of the frames 2 and 2' are improved. It is noted that the fastening members 21 are made of metal to enhance the engagement strength of the frames 2 and 2'.

Specifically, each of the at least one first engagement portion 23 includes a first concave portion 231 and a first protruding portion 232. Similarly, each of the at least one second engagement portion 23' includes a second concave portion 231' and a second protruding portion 232'. The first protruding portion 232 can be engaged with the second concave portion 231'. The second protruding portion 232' can be engaged with the first concave portion 231. In this arrangement, the structure is simple which reduces the manufacturing cost and improves the convenience in assembly.

Referring to FIGS. 1 and 2, the frame 2 includes a base 24 and the frame 2' includes a base 24'. The bases 24 and 24' can be connected to each other. The connected bases 24 and 24' is placed on a planar surface to support the motor 1, avoiding the motor 1 from hanging in the air. Therefore, the connected bases 24 and 24' can provide a fixation function for the motor 1. The frame 2 further includes a receiving portion 25 and the frame 2' further includes a receiving portion 25'. The two receiving portions 25 and 25' can be connected to each other to receive a buffering member 5. A bearing unit 6 is received in the buffering member 5. The shaft 11 of the motor 1 extends through the bearing unit 6. Thus, the buffering member 5 can provide a buffering function to reduce the vibration.

Referring to FIG. 1, the impeller 3 is connected to the motor 1 and is driven to rotate by the motor 1. The impeller 3 is made of aluminum material or plastic material to reduce the weight thereof. However, the impeller 3 can also be made of other materials.

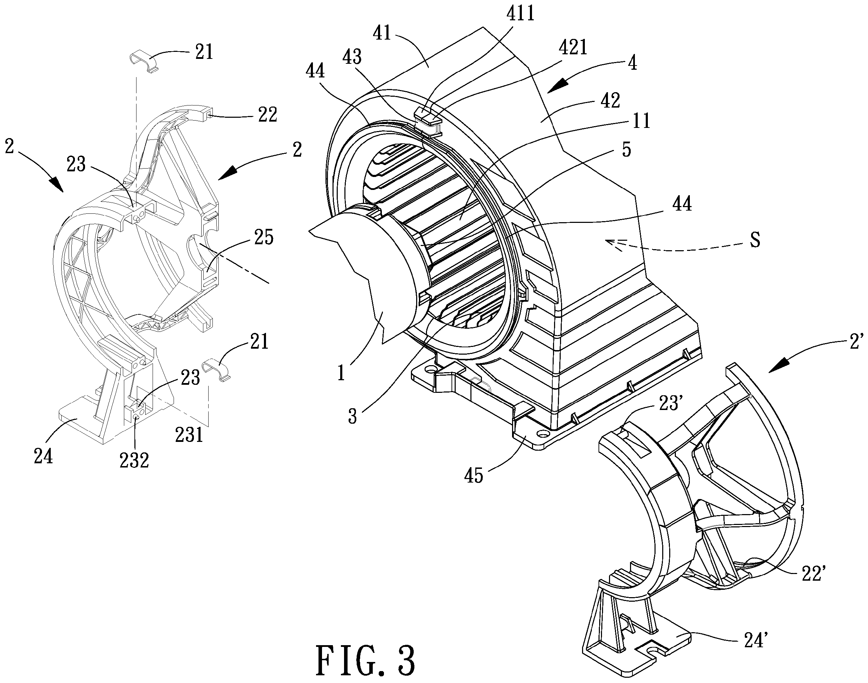

Referring to FIGS. 1 and 3, the housing assembly 4 houses the impeller 3 and includes a first housing part 41 and a second housing part 42. The first housing part 41 and the second housing part 42 can be connected to each other to form a compartment **S.** The impeller 3 can be received in the compartment **S.** A protruding lip 44 is provided on one of two end faces of the first housing part 41 which is relatively adjacent to the motor 1. Similarly, another protruding lip 44 is provided on one of two end faces of the second housing part 42 which is relatively adjacent to the motor 1. The grooves 22 and 22' respectively of the frames 2 and 2' are coupled with the protruding lip 44 to accommodate the protruding lip 44 in the grooves 22 and 22'. Accordingly, the motor 1 can be housed in the housing assembly 4.

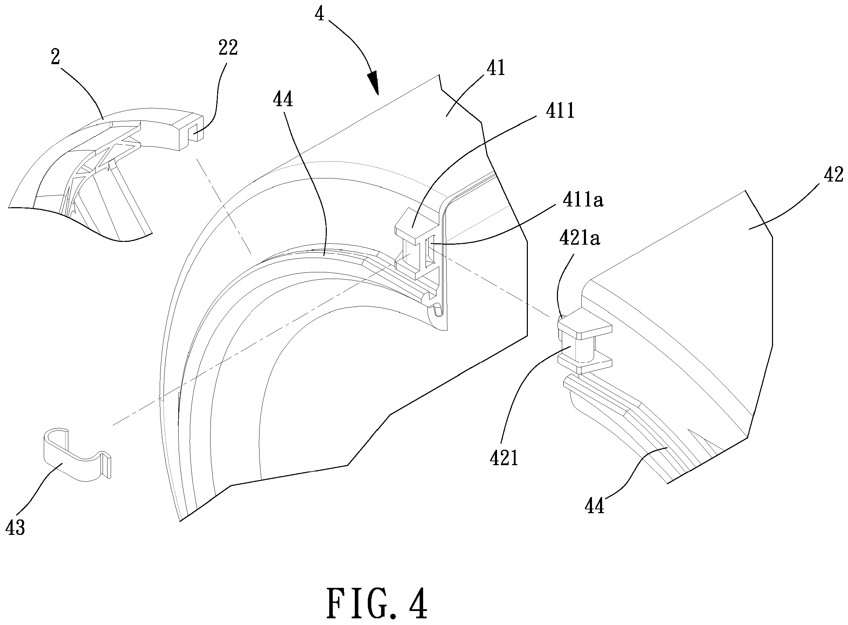

Referring to FIG. 4 also, at least one first coupling portion 411is provided on each of the two end faces of the first housing part 41, and at least one second coupling portion 421 is provided on each of the two end faces of the second housing part 42. The at least one first coupling portion 411 and the at least one second coupling portion 421 are connected to each other by way of fastening using at least one fastening member 43, thereby securely engaging the first housing part 41 and the second housing part 42 with each other. In this embodiment, the first coupling portion 411 includes a recess 411a and the second coupling portion 421 includes a tongue 421a. The tongue 421a can be inserted into the recess 411a. In this arrangement, the structure is simple which reduces the manufacturing cost and improves the convenience in assembly. The at least one fastening member 43 is preferably made of metal to enhance the engagement between the first housing part 41 and the second housing part 42.

It is noted that the first housing part 41 and the second housing part 42 can be coupled with each other to form a support 45. The bottom face of the support 45 is preferably in the same level as those of the bases 24 and 24'. In this arrangement, the support 45 can support the motor 1, avoiding the motor 1 from hanging in the air. Thus, the motor 1 can be fixed in a predetermined location.

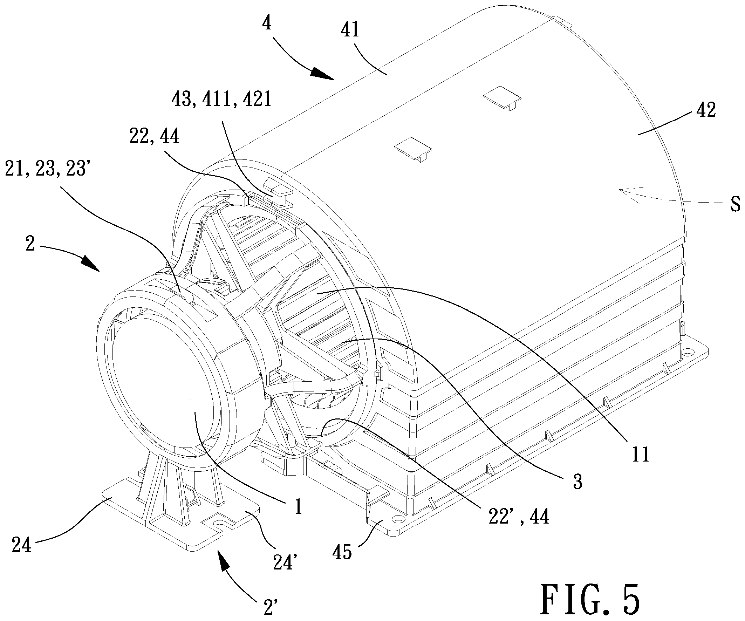

Referring to FIG. 5, based on the above structure, the two frames 2 and 2' are combined with each other and then are fastened with each other using the fastening members 21 during the assembly of the fan. Then, the first housing part 41 and the second housing part 42 are connected to each other and are fastened together using the fastening members 43. Finally, the grooves 22 and 22' respectively of the frames 2 and 2' are engaged with the protruding lip 44. Since the opening of each of the grooves 22 and 22' faces the shaft 11, the protruding lip 44 extends radially outward of the shaft 11. Therefore, the grooves 22 and 22' are radially outward of the shaft 11 and the protruding lip 44 is radially inward of the shaft 11, permitting the protruding lip 44 to be received in the grooves 22 and 22'. As a result, the motor 1 is properly housed in the housing assembly 4. This facilitates the assembly of the fan without requiring the operators to align the screwing holes of the components and to insert the fasteners therethrough. Advantageously, the assembly procedure of the fan is simplified and the labor cost is reduced, improving the convenience and efficiency in assembly of the fan.

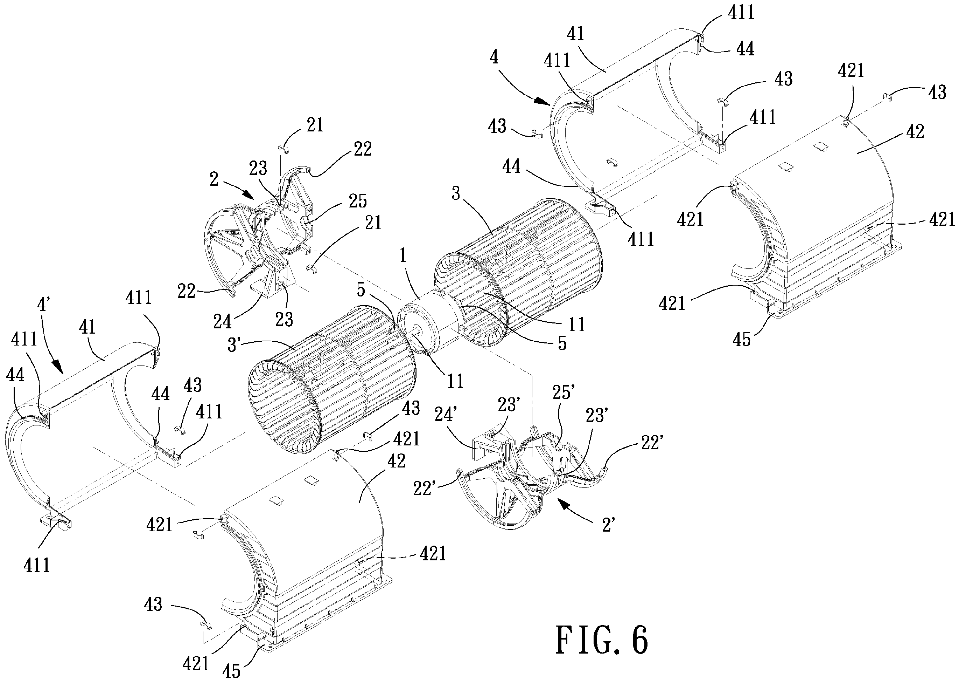

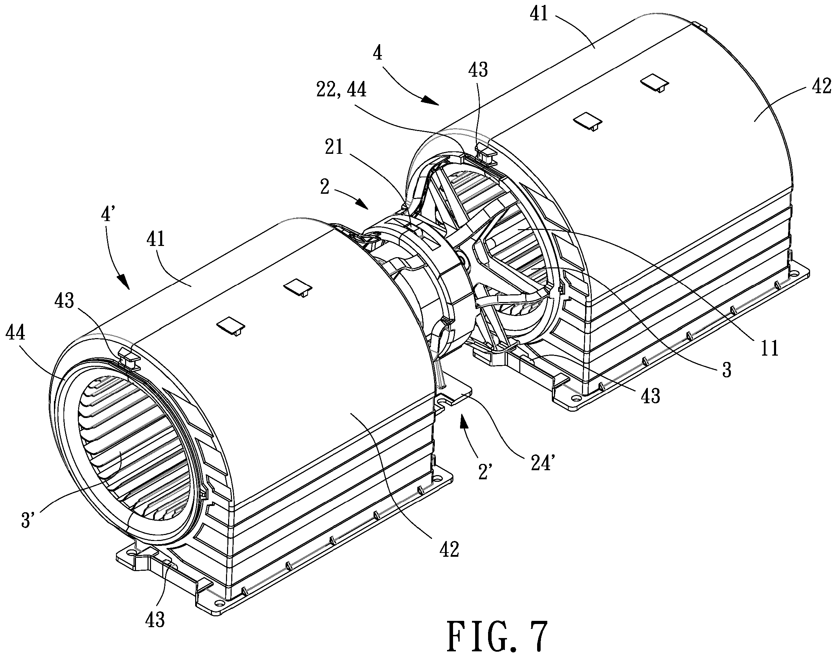

FIGS. 6 and 7 show a fan according to a second embodiment of the invention. The second embodiment of the invention is substantially the same as the first embodiment except for that the fan further includes another impeller (labeled as 3') and another housing assembly (labeled as 4'). The impeller 3' is connected to another side of the motor 1 and is driven to rotate by the motor 1. The housing assembly 4' houses the impeller 3'. In this regard, the frame 2 includes two grooves 22 respectively at two ends of the frame 2 which are symmetric to each other. Likewise, the frame 2' includes two grooves 22' respectively at two ends of the frame 2' which are symmetric to each other. Preferably, the impeller 3' has the same structure as the impeller 3 and the housing assembly 4' has the same structure as the housing assembly 4. In this arrangement, the impeller 3 and the housing assembly 4 form a structure at one end of the motor 1 which is symmetric to the structure of the impeller 3' and the housing assembly 4' at another end of the motor 1. In this structure, the air volume is larger and the utility of the fan is improved.

In conclusion, in the fan according to the invention, the assembly of the fan is completed by simply fastening the two frames with each other and fastening the first and second housing parts with each other. The assembly of the fan does not require the operators to align the screwing holes of the components and to accordingly insert the fasteners therethrough. Therefore, the complexity in assembly of the fan can be simplified and the labor cost is reduced, thereby improving the convenience and efficiency in assembly of the fan.

## Claims

1. A fan comprising:
a motor (1);
two frames (2 and 2') coupled with an outer periphery of the motor (1);
an impeller (3) connected to the motor (1) and driven to rotate by the motor (1); and
a housing assembly (4) housing the impeller (3) and including a first housing part (41) and a second housing part (42),
wherein the fan is **characterized in that**:
the two frames (2 and 2') are engaged with each other by way of fastening, wherein each of the two frames (2 and 2') includes one groove (22, 22'), wherein the first and second housing parts (41, 42) are engaged with each other by way of fastening, wherein a protruding lip (44) is provided on one of two end faces of the first housing part (41) which is relatively adjacent to the motor (1), wherein another protruding lip (44) is provided on one of two end faces of the second housing part (42) which is relatively adjacent to the motor (1), and wherein the protruding lip (44) and the other protruding lip (44) are engaged with the grooves (22 and 22') of the two frames (2, 2').

2. The fan as claimed in claim 1, **characterized in that** the housing assembly (4) further includes at least one fastening member (43), wherein the first and second housing parts (41 and 42) are fastened with each other through the at least one fastening member (43).

3. The fan as claimed in claim 2, **characterized in that** at least one first coupling portion (411) is provided on each of the two end faces of the first housing part (41), wherein at least one second coupling portion (421) is provided on each of the two end faces of the second housing part (42), and wherein the at least one first coupling portion (411) and the at least one second coupling portion (421) are connected to each other by way of fastening through the at least one fastening member (43).

4. The fan as claimed in claim 3, **characterized in that** each of the at least one first coupling portion (411) includes a recess (411a) and each of at least one second coupling portion (421) includes a tongue (421a) inserted into the recess (411a).

5. The fan as claimed in claim 1, **characterized in that** the two frames (2 and 2') are fastened with each other through at least one fastening member (21).

6. The fan as claimed in claim 5, **characterized in that** one of the two frames (2 and 2') includes at least one first engagement portion (23), wherein another of the two frames (2 and 2') includes at least one second engagement portion (23') engaged with the at least one first engagement portion (23) by way of fastening through the at least one fastening member (21).

7. The fan as claimed in claim 6, **characterized in that** each of the at least one first engagement portion (23) includes a first concave portion (231) and a first protruding portion (232), wherein each of the at least one second engagement portion (23') includes a second concave portion (231') and a second protruding portion (232'), wherein the first protruding portion (232) is engaged with the second concave portion (231'), and wherein the second protruding portion (232') is engaged with the first concave portion (231).

8. The fan as claimed in claim 1, **characterized in that** one of the two frames (2 and 2') includes a base (24), wherein another of the two frames (2 and 2') includes another base (24'), and wherein the base (24) and the other base (24') are connected to each other.

9. The fan as claimed in claim 8, **characterized in that** the first housing part (41) and the second housing part (42) are coupled with each other to form a support (45), wherein a bottom face of the support (45) is in a same level as a level of the base (24) and a level of the other base (24').

10. The fan as claimed in claim 1, **characterized in** further comprising a buffering member (5), wherein one of the two frames (2 and 2') includes a receiving portion (25), wherein another of the two frames (2 and 2') includes another receiving portion (25'), and wherein the receiving portion (25) and the other receiving portion (25') are connected to each other to receive the buffering member (5).

11. The fan as claimed in claim 1, **characterized in** further comprising another impeller (3') and another housing assembly (4'), wherein the other impeller (3') is driven to rotate by the motor (1) and is located at one side of the motor (1) opposite to another side of the motor (1) where the impeller (3) is, wherein the other housing assembly (4') houses the other impeller (3'), wherein one of the two frames (2 and 2') includes two grooves (22), and wherein another of the two frames (2 and 2') includes another two grooves (22').

## Patentansprüche

1. Gebläse, das Folgendes umfasst:
einen Motor (1);
zwei Rahmen (2 und 2'), die mit einem Außenumfang des Motors (1) gekoppelt sind;
ein Flügelrad (3), das mit dem Motor (1) verbunden ist und durch den Motor (1) angetrieben wird, um sich zu drehen; und
eine Gehäuseanordnung (4), die das Flügelrad (3) aufnimmt und ein erstes Gehäuseteil (41) und ein zweites Gehäuseteil (42) umfasst,
wobei das Gebläse **dadurch gekennzeichnet ist, dass**:
die zwei Rahmen (2 und 2') mittels Befestigen miteinander in Eingriff gelangen, wobei jeder der zwei Rahmen (2 und 2') eine Rille (22, 22') aufweist, wobei das erste und das zweite Gehäuseteil (41, 42) mittels Befestigen miteinander in Eingriff gelangen, wobei eine vorstehende Lippe (44) an einer der zwei Endflächen des ersten Gehäuseteils (41), die an den Motor (1) angrenzt, vorgesehen ist, wobei eine weitere vorstehende Lippe (44) an einer der zwei Endflächen des zweiten Gehäuseteils (42), die an den Motor (1) angrenzt, vorgesehen ist, und wobei die vorstehende Lippe (44) und die weitere vorstehende Lippe (44) mit den Rillen (22 und 22') der zwei Rahmen (2, 2') in Eingriff gelangen.

2. Gebläse nach Anspruch 1, **dadurch gekennzeichnet, dass** die Gehäuseanordnung (4) ferner wenigstens ein Befestigungselement (43) umfasst, wobei das erste und das zweite Gehäuseteil (41 und 42) durch das wenigstens eine Befestigungselement (43) aneinander befestigt sind.

3. Gebläse nach Anspruch 2, **dadurch gekennzeichnet, dass** wenigstens ein erster Kopplungsabschnitt (411) an jeder der zwei Endflächen des ersten Gehäuseteils (41) vorgesehen ist, wobei wenigstens ein zweiter Kopplungsabschnitt (421) an jeder der zwei Endflächen des zweiten Gehäuseteils (42) vorgesehen ist und wobei der wenigstens eine erste Kopplungsabschnitt (411) und der wenigstens eine zweite Kopplungsabschnitt (421) mittels Befestigen durch das wenigstens eine Befestigungselement (43) miteinander verbunden sind.

4. Gebläse nach Anspruch 3, **dadurch gekennzeichnet, dass** jeder des wenigstens einen ersten Kopplungsabschnitts (411) eine Vertiefung (411a) aufweist und jeder des wenigstens einen zweiten Kopplungsabschnitts (421) eine Zunge (421a) aufweist, die in die Vertiefung (411a) eingesetzt ist.

5. Gebläse nach Anspruch 1, **dadurch gekennzeichnet, dass** die zwei Rahmen (2 und 2') durch wenigstens ein Befestigungselement (21) aneinander befestigt sind.

6. Gebläse nach Anspruch 5, **dadurch gekennzeichnet, dass** einer der zwei Rahmen (2 und 2') wenigstens einen ersten Eingriffabschnitt (23) aufweist, wobei der jeweils andere der zwei Rahmen (2 und 2') wenigstens einen zweiten Eingriffabschnitt (23') aufweist, der mit dem wenigstens einen ersten Eingriffabschnitt (23) mittels Befestigen durch das wenigstens eine Befestigungselement (21) in Eingriff gelangt.

7. Gebläse nach Anspruch 6, **dadurch gekennzeichnet, dass** jeder des wenigstens einen ersten Eingriffabschnitts (23) einen ersten konkaven Abschnitt (231) und einen ersten vorstehenden Abschnitt (232) aufweist, wobei jeder des wenigstens einen zweiten Eingriffabschnitts (23') einen zweiten konkaven Abschnitt (231') und einen zweiten vorstehenden Abschnitt (232') umfasst, wobei der erste vorstehende Abschnitt (232) mit dem zweiten konkaven Abschnitt (231') in Eingriff gelangt und wobei der zweite vorstehende Abschnitt (232') mit dem ersten konkaven Abschnitt (231) in Eingriff gelangt.

8. Gebläse nach Anspruch 1, **dadurch gekennzeichnet, dass** einer der zwei Rahmen (2 und 2') eine Basis (24) aufweist, wobei der jeweils andere der zwei Rahmen (2 und 2') eine weitere Basis (24') aufweist, und wobei die Basis (24) und die weitere Basis (24') miteinander verbunden sind.

9. Gebläse nach Anspruch 8, **dadurch gekennzeichnet, dass** das erste Gehäuseteil (41) und das zweite Gehäuseteil (42) miteinander gekoppelt sind, um eine Halterung (45) zu bilden, wobei eine Bodenfläche der Halterung (45) auf einer gleichen Höhe wie eine Höhe der Basis (24) und eine Höhe der weiteren Basis (24') liegt.

10. Gebläse nach Anspruch 1, **dadurch gekennzeichnet, dass** es ferner ein Dämpfungselement (5) umfasst, wobei einer der zwei Rahmen (2 und 2') einen Aufnahmeabschnitt (25) aufweist, wobei der andere der zwei Rahmen (2 und 2') einen weiteren Aufnahmeabschnitt (25') aufweist und wobei der Aufnahmeabschnitt (25) und der weitere Aufnahmeabschnitt (25') miteinander verbunden sind, um das Dämpfungselement (5) aufzunehmen.

11. Gebläse nach Anspruch 1, **dadurch gekennzeichnet, dass** es ferner ein weiteres Flügelrad (3') und eine weitere Gehäuseanordnung (4') umfasst, wobei das weitere Flügelrad (3') durch den Motor (1) angetrieben wird, um sich zu drehen, und an einer Seite des Motors (1) gegenüber der anderen Seite des Motors (1), bei der sich das Flügelrad (3) befindet, angeordnet ist, wobei die weitere Gehäuseanordnung (4') das weitere Flügelrad (3') aufnimmt, wobei einer der zwei Rahmen (2 und 2') zwei Rillen (22) aufweist und wobei der jeweils andere der zwei Rahmen (2 und 2') weitere zwei Rillen (22') aufweist.

## Revendications

1. Un ventilateur comprenant :
un moteur (1) ;
deux bâtis (2 et 2') couplés avec une périphérie externe du moteur (1) ;
un impulseur (3) raccordé au moteur (1) et entraîné pour tourner grâce au moteur (1) ; et
un ensemble de boîtier (4) logeant l'impulseur (3) et comprenant une première partie de boîtier (41) et une seconde partie de boîtier (42),
dans lequel le ventilateur est **caractérisé en ce que** :
les deux bâtis (2 et 2') sont mis en prise entre eux au moyen de fixation,
dans lequel chacun des deux bâtis (2 et 2') comprend une rainure (22, 22'),
dans lequel les première et seconde parties de boîtier (41, 42) sont mises en prise entre elles au moyen de fixation, dans lequel une lèvre en saillie (44) est prévue sur l'une des deux faces d'extrémité de la première partie de boîtier (41) qui est relativement adjacente au moteur (1), dans lequel une autre lèvre en saillie (44) est prévue sur l'une des deux faces d'extrémité de la seconde partie de boîtier (42) qui est relativement adjacente au moteur (1), et dans lequel la lèvre en saillie (44) et l'autre lèvre en saillie (44) sont mises en prise avec les rainures (22 et 22') des deux bâtis (2, 2').

2. Le ventilateur selon la revendication 1, **caractérisé en ce que** l'ensemble de boîtier (4) comprend en outre au moins un élément de fixation (43), dans lequel les première et seconde parties de boîtier (41 et 42) sont fixées entre elles par le biais du au moins un élément de fixation (43).

3. Le ventilateur selon la revendication 2, **caractérisé en ce qu'**au moins une première partie de couplage (411) est prévue sur chacune des deux faces d'extrémité de la première partie de boîtier (41), dans lequel au moins une seconde partie de couplage (421) est prévue sur chacune des deux faces d'extrémité de la seconde partie de boîtier (42), et dans lequel la au moins une première partie de couplage (411) et la au moins une seconde partie de couplage (421) sont raccordées entre elles au moyen de fixation par le biais du au moins un élément de fixation (43).

4. Le ventilateur selon la revendication 3, **caractérisé en ce que** chacune parmi la au moins une première partie de couplage (411) comprend un évidement (411a) et chacune de la au moins une seconde partie de couplage (421) comprend une languette (421a) insérée dans l'évidement (411a).

5. Le ventilateur selon la revendication 1, **caractérisé en ce que** les deux bâtis (2 et 2') sont fixés entre eux par le biais d'au moins un élément de fixation (21).

6. Le ventilateur selon la revendication 5, **caractérisé en ce que** l'un des deux bâtis (2 et 2') comprend au moins une première partie de mise en prise (23) et dans lequel un autre des deux bâtis (2 et 2') comprend au moins une seconde partie de mise en prise (23') mise en prise avec la au moins une première partie de mise en prise (23) au moyen de fixation par le biais du au moins un élément de fixation (21).

7. Le ventilateur selon la revendication 6, **caractérisé en ce que** chacune de la au moins une première partie de mise en prise (23) comprend une première partie concave (231) et une première partie en saillie (232), dans lequel chacune de la au moins une seconde partie de mise en prise (23') comprend une seconde partie concave (231') et une seconde partie en saillie (232'), dans lequel la première partie en saillie (232) est mise en prise avec la seconde partie concave (231') et dans lequel la seconde partie en saillie (232') est mise en prise avec la première partie concave (231).

8. Le ventilateur selon la revendication 1, **caractérisé en ce que** l'un des deux bâtis (2 et 2') comprend une base (24), dans lequel un autre des deux bâtis (2 et 2') comprend une autre base (24'), et dans lequel la base (24) et l'autre base (24') sont raccordées entre elles.

9. Le ventilateur selon la revendication 8, **caractérisé en ce que** la première partie de boîtier (41) et la seconde partie de boîtier (42) sont couplées entre elles afin de former un support (45), dans lequel une face inférieure du support (45) est au même niveau qu'un niveau de la base (24) et qu'un niveau de l'autre base (24').

10. Le ventilateur selon la revendication 1, **caractérisé en ce qu'**il comprend en outre un élément tampon (5), dans lequel l'un des deux bâtis (2 et 2') comprend une partie de réception (25), dans lequel un autre des deux bâtis (2 et 2') comprend une autre partie de réception (25') et dans lequel la partie de réception (25) et l'autre partie de réception (25') sont raccordées entre elles pour recevoir l'élément tampon (5).

11. Le ventilateur selon la revendication 1, **caractérisé en ce qu'**il comprend en outre un autre impulseur (3') et un autre ensemble de boîtier (4'), dans lequel l'autre impulseur (3') est entraîné pour tourner grâce au moteur (1) et est positionné d'un côté du moteur (1) opposé à un autre côté du moteur (1) où est l'impulseur (3), dans lequel l'autre ensemble de boîtier (4') loge l'autre impulseur (3'), dans lequel l'un des deux bâtis (2 et 2') comprend deux rainures (22) et dans lequel un autre des deux bâtis (2 et 2') comprend deux autres rainures (22').
